# EUROPÄISCHE PATENTANMELDUNG

(11) **EP 0 963 866 A2**
(43) Veröffentlichungstag der Anmeldung: **15.12.1999**
(21) Anmeldenummer: 99108837.8
(22) Anmeldetag: 04.05.1999
(51) Int. Cl.: B60G 15/06

(54) **Radaufhängung für ein Kraftfahrzeug**

(30) Priorität: 08.06.1998 DE 19825569; 23.06.1998 DE 19827864
(71) Anmelder: Dr.Ing. h.c.F. Porsche Aktiengesellschaft, 70435 Stuttgart (DE)
(72) Erfinder: Hawener, Rainer, 75233 Tiefenbronn (DE); Kluge, Andreas, 71272 Renningen (DE)

(57) **Zusammenfassung**

Eine Radaufhängung für ein Kraftfahrzeug, insbesondere eine Hinterradaufhängung, besteht mit einer separat von einem Dämpfer (8) angeordneten Feder (6). Die Feder und der Dämpfer sind an ihren unteren Enden über eine gemeinsame, etwa quer zum Fahrzeug angeordneten Konsole (10), an einem Hinterachslängsrohr (1) abgestützt und der Dämpfer ist mit seinem oberen Ende an einer, an einem Aufbauträger (3) befestigten Trageinrichtung (7) schwenkbar gehalten, wobei die Feder mit ihrem oberen Ende in einer in dem Aufbauträger integrierten Abstützeinrichtung (5) gelagert ist.

## Beschreibung

Die Erfindung bezieht sich auf eine Radaufhängung für ein Kraftfahrzeug nach dem Oberbegriff des Anspruchs 1.

Es ist aus der US-PS 3,727,939 eine Radaufhängung für ein Kraftfahrzeug bekannt, bei der eine Spiralfeder separat zu einem Dämpfer in bezug auf die Längsrichtung des Fahrzeugs angeordnet ist. Die Abstützung zum Fahrzeugaufbau sowie zur Fahrzeugaufhängung erfolgt über einzelne Lagerungen, die in aufwendiger Weise gestaltet sind.

Aufgabe der Erfindung ist es, eine Radaufhängung, insbesondere eine Hinterradaufhängung mit verbesserten Lagerungen für einen Dämpfer und einer separat hierzu angeordneten Spiralfeder zu schaffen, welche einfach montierbar sind und eine außenliegende Lage des Dämpfers in bezug auf das Rad ermöglicht.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß eine einfache untere Lagerung für die Spiralfeder als auch für den Dämpfer durch eine gemeinsame quer angeordnete Konsole gebildet wird, die mit einem Hinterachslängsrohr, beispielsweise durch Schweißungen verbunden wird. Die oberen Lagerungen für den Dämpfer und die Spiralfeder sind getrennt ausgebildet und bestehen für den Dämpfer aus einer außen an einem Aufbauträger angesetzten Trageinrichtung, wodurch der Dämpfer zwischen dem Hinterrad und dem Hinterachslängsrohr der Radaufhängung angeordnet ist, d.h. daß der Abstand zwischen den Dämpfern jeder Radseite insgesamt eine relativ große Basis aufweisen.

Desweiteren ist die obere Lagerung in einem Höhenabstand zur oberen Lagerung der Spiralfeder vorgesehen.

Die Spiralfeder ist annähernd parallel liegend zum Dämpfer in Fahrzeugquerrichtung angeordnet und ist in ihrem oberen Ende in einer Abstützeinrichtung gehalten, die in dem Aufbauträger integriert ist. Diese Abstützeinrichtung umfaßt neben einem Federteller für die Spiralfeder noch eine innere Zusatzfeder als Anschlagelement, um eine Durchfederung aufzufangen.

Benachbart dieser Abstützeinrichtung ist außenseitig des Aufbauträgers die Tragvorrichtung für das obere Ende des Dämpfers vorgesehen, welche sich bis oberhalb der Abstützeinrichtung erstreckt, so daß die Lagerung des Dämpfers in einem Höhenabstand zur Abstützeinrichtung liegt. Durch die außenliegende Anordnung des Dämpfers mit relativ großern Abstand wird eine verbesserte Wankdämpfung erzielt.

Die gemeinsame Lagerungskonsole für den Dämpfer und die Spiralfeder kann in einfacher Weise mit dem Hinterachslängsrohr verbunden werden, beispielsweise durch eine Schweißung. Durch eine Ausnehmung oder Ausformung kann der obere Federteller der Abstützeinrichtung für die Spiralfeder mit dem Aufbauträger verbunden werden, so daß eine einfache Vormontage der Radaufhängungseinheit möglich wird. Insbesondere kann der Federteller mit einem Topf verbunden sein, der sich innerhalb des Aufbauträgers erstreckt und als sogenannter Dom heraussteht. Mit diesem Dom kann obenseitig dann die Tragvorrichtung für den Dämpfer verbunden sein.

Ein Ausführungsbeispiel der Erfindung ist in den Zeichnungen dargestellt und wir im folgenden näher beschrieben.

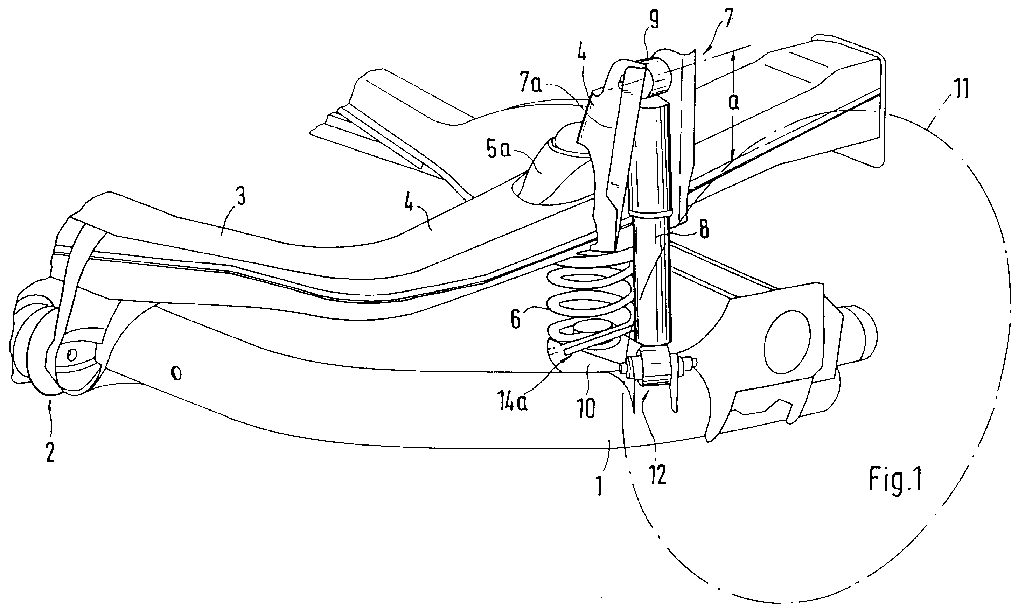

Es zeigen
- Fig. 1: eine schaubildliche Darstellung einer Hinterradaufhängung mit einem separat von einer Spiralfeder angeordneten Dämpfer,

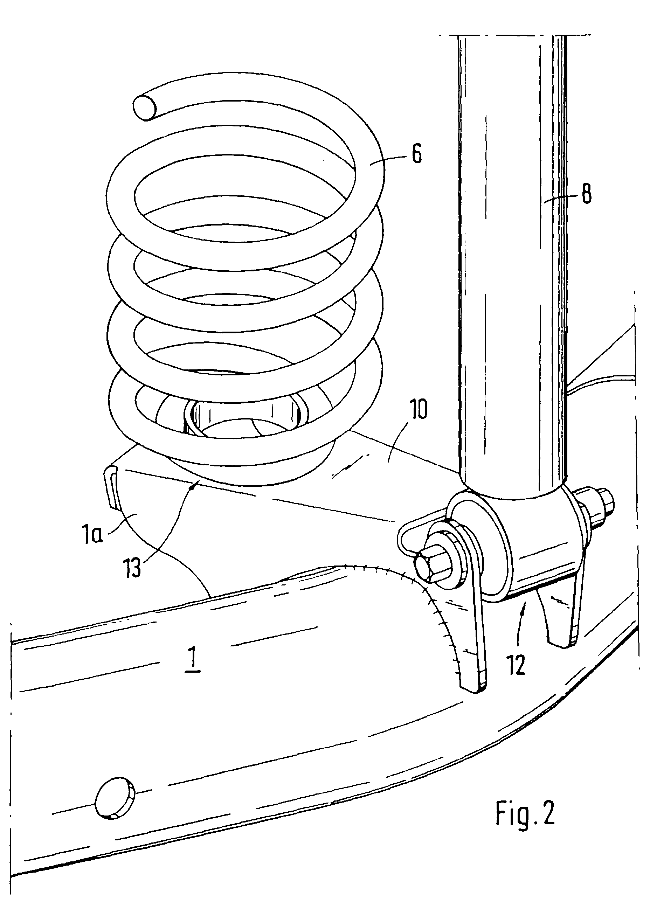

- Fig. 2: eine vergrößerte Darstellung einer gemeinsamen Konsole für die untere Lagerung eines Dämpfers und der Spiralfeder,

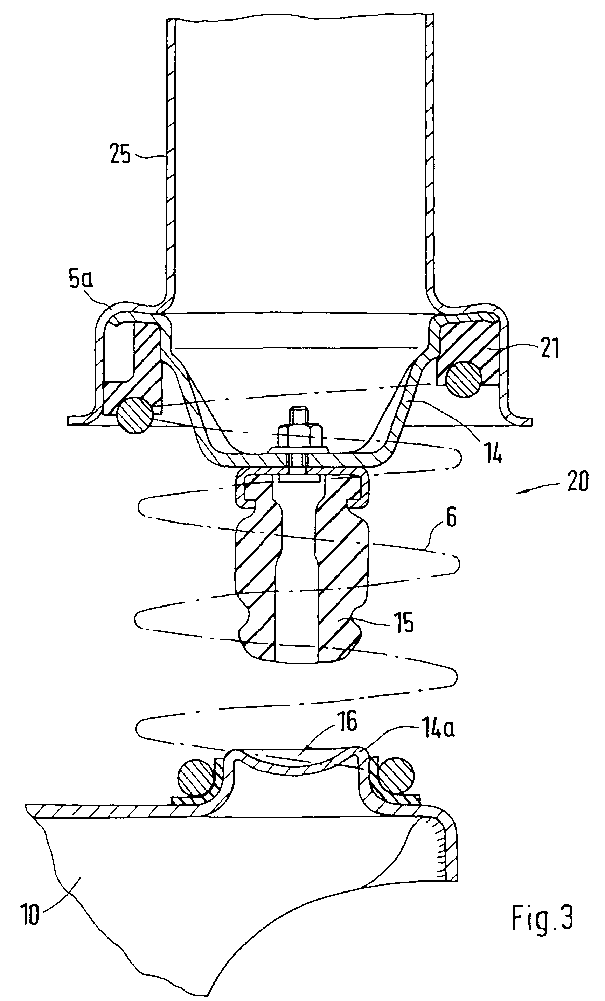

- Fig. 3: eine Darstellung der Abstützeinrichtung für die Spiralfeder im Aufbauträger,

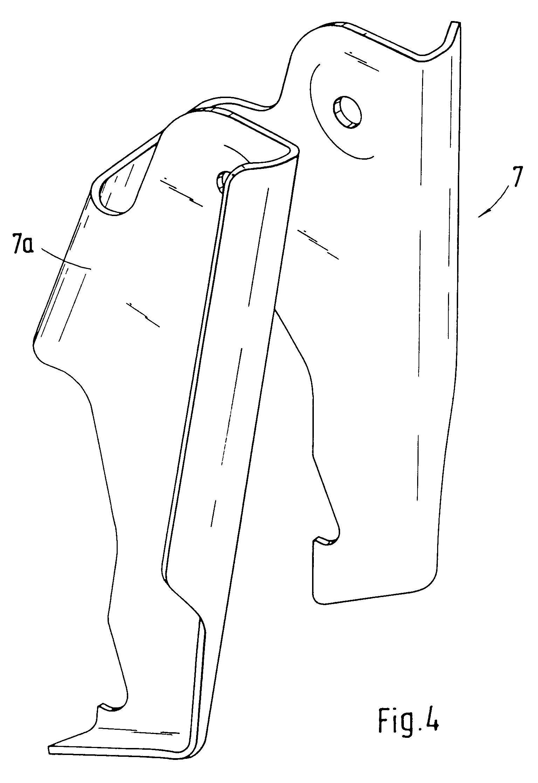

- Fig. 4: eine vergrößerte Darstellung der Trageinrichtung für den Dämpfer und

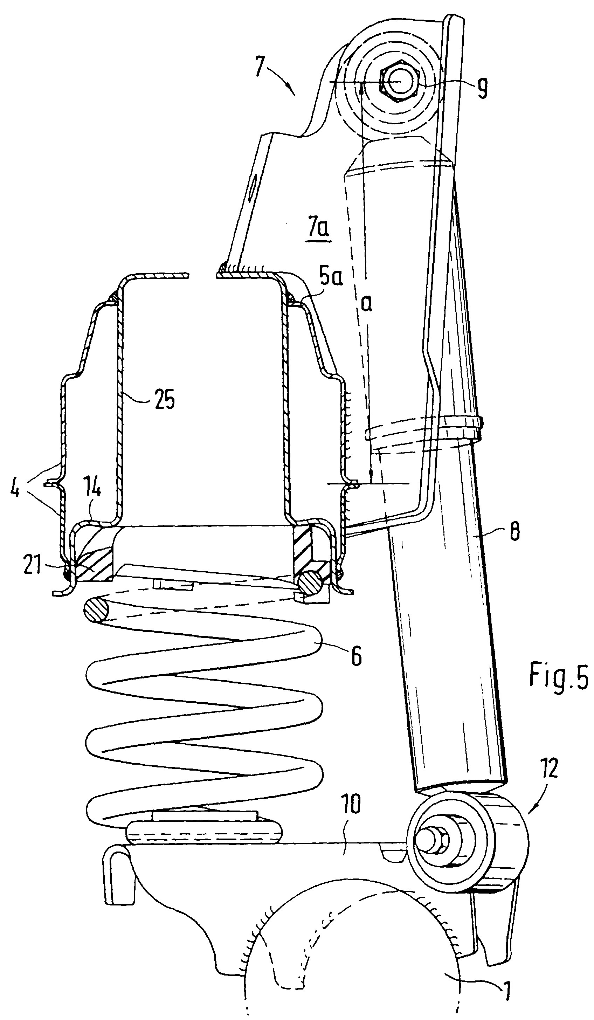

- Fig. 5: einen Schnitt durch die gemeinsame quer angeordnete Konsole für den Dämpfer und die Spiralfeder sowie einem oberen Federteller für die Spiralfeder und der Trageinrichtung für den Dämpfer.

Die Radaufhängung umfaßt im wesentlichen ein U-förmig ausgebildetes Hinterachsrohr 1, das über ein Zentrallager 2 mit einem Aufbauquerträger 3 verbunden ist. An einem Längsträger 4 dieses Aufbauquerträgers 3 ist über eine Trageinrichtung 7 ein Dämpfer 8 und über eine Abstützeinrichtung 5 des Aufbauträgers 3 ist ein oberes Ende einer Feder 6 in einem Federteller 14 abgestützt.

Die unteren Enden des Dämpfers 8 und der Spiralfeder 6 sind in einer gemeinsamen quer ausgerichteten Konsole 10 abgestützt und gelagert. Die Feder 6 und der Dämpfer 8 sind etwa parallel liegend zueinander in Fahrzeugquerrichtung angeordnet, wobei die Feder 6 - in bezug auf das Fahrzeugrad 11 - innenliegend vorgesehen ist.

Die gemeinsame Konsole 10 besteht aus einem Blechformteil, etwa U-profilförmigen Querschnitts und legt sich obenseitig auf das Hinterachslängsrohr 1 auf und ist mit diesem verschweißt. Sie erstreckt sich quer nach innen zur Radmittenlängsebene und weist im Bereich des Rohres 1 eine untere Lagerung 12 für den Dämpfer 8 auf. Unmittelbar benachbart zu dieser Lagerung 12 ist die Spiralfeder 6 über einen Federteller 14a gelagert.

Gegenüberliegend dieser Konsole 10 ist die in den Aufbauträger 4 integrierte Abstützeinrichtung 5 angeordnet. Sie besteht aus einem in einer Ausnehmung oder Ausformung des Aufbauträgers 4 eingesetzten Federteller 14, der beispielsweise aus einem Topf 25 besteht und einen Dom 5a bildet. Dieser Dom 5a und Topf 25 ragt aus dem Aufbauträger 4 heraus. Der Federteller 14 weist eine konzentrisch zur Spiralfeder 6 angeordnetes elastisches Abstützelement 15 auf, das dem unteren Federteller 14a gegenübersteht und sich beispielsweise in einer konkaven Fläche 16 abstützen kann.

Die Trageinrichtung 7 für den Dämpfer 8 besteht im wesentlichen aus einem etwa U-profilförmigen länglichen hochragenden Profil und ist außenseitig des Aufbauträgers 4 mittels einer Schweißung verbunden. Das Profil ist teilweise mit dem Dom 5a verbunden.

## Patentansprüche

1. Radaufhängung für ein Kraftfahrzeug, insbesondere Hinterradaufhängung, mit einer separat von einem Dämpfer angeordneten Feder, dadurch gekennzeichnet, daß die Feder (6) und der Dämpfer (8) an ihren unteren Enden über eine gemeinsame, etwa quer zum Fahrzeug angeordneten Konsole (10) an einem Hinterachslängsrohr (1) abgestützt sind und der Dämpfer (8) mit seinem oberen Ende an einer, an einem Aufbauträger (4) befestigten Trageinrichtung (7) schwenkbar gehalten ist, wobei die Feder (6) mit ihrem oberen Ende in einer in dem Aufbauträger (4) integrierten Abstützeinrichtung (20) gelagert ist.

2. Radaufhängung nach Anspruch 1, dadurch gekennzeichnet, daß der Dämpfer (8) und die Feder (6) etwa in Querrichtung parallel liegend nebeneinander angeordnet sind, wobei die Feder (6) - in bezug auf ein Fahrzeugrad (11) - innenliegend angeordnet ist.

3. Radaufhängung nach den Ansprüchen 1 oder 2, dadurch gekennzeichnet, daß die gemeinsame querliegende Konsole (10) zur Lagerung der Feder (6) einen sich vom Hinterachslängsrohr (1) nach innen erstreckenden Arm (1a) aufweist, der frei vorkragend angeordnet ist und eine Lagerung (13) für die Feder (6) aufweist, wobei die Lagerung (12) für den Dämpfer (8) sich etwa auf dem Hinterachslängsrohr (1) befindet.

4. Radaufhängung nach den Ansprüchen 1, 2 oder 3, dadurch gekennzeichnet, daß die Trageinrichtung (7) aus einem U-förmigen, aufrecht stehenden Profil (7a) besteht, welches mit dem Aufbauträger (4) verbunden ist und sich teilweise an einem Dom (5a) im Aufbauträger (4) abstützt und zwischen Schenkeln des Profils (7a) der Dämpfer (8) bzw. die Lagerung (9) des Dämpfers (8) aufnimmt.

5. Radaufhängung nach den Ansprüchen 1, 2, 3 oder 4, dadurch gekennzeichnet, daß die Abstützeinrichtung (20) für die Feder (6) einen in einer Ausformung des Aufbauträgers (4) gehaltenen oberen Federteller (14) aufweist, dem ein unterer Federteller (14a) in der Konsole (10) gegenübersteht.

6. Radaufhängung nach einem oder mehreren der vorhergehenden Ansprüche, dadurch gekennzeichnet, daß der obere Federteller (14) eine elastische Abstützung (21) für die Feder (6) besitzt und mit einer innerhalb der Feder (6) koaxial angeordneten Zusatzfeder (15) verbunden ist, die als Anschlag den unteren Federteller (14a) aufweist.

7. Radaufhängung nach einem oder mehreren der vorhergehenden Ansprüche, dadurch gekennzeichnet, daß der obere Federteller (14) für die Feder (6) aus einem Topf (25) besteht, welcher den Dom (5a) bildet und in den Aufbauträger (4) durchragend eingesetzt und mit diesem verbunden ist.
